# EUROPÄISCHE PATENTSCHRIFT

(11) **EP 2 829 565 B1**
(45) Veröffentlichungstag und Bekanntmachung des Hinweises auf die Patenterteilung: **13.01.2016**
(21) Anmeldenummer: 14177845.6
(22) Anmeldetag: 21.07.2014
(51) Int. Cl.: C08G 77/16

(54) **Verfahren zur Stabilisierung von Siloxanen mit endständigen Hydroxygruppen**
Method of stabilizing siloxanes having terminal hydroxy groups
Procédé de stabilisation de siloxanes avec des groupes hydroxy à liaisons terminales

(30) Priorität: 22.07.2013 DE 102013214312
(43) Veröffentlichungstag der Anmeldung: 28.01.2015
(73) Patentinhaber: Wacker Chemie AG, 81737 München (DE)
(72) Erfinder: Baskakov, Agnes, 5122 Hochburg (AT); Geisberger, Gilbert, 84503 Altötting (DE); Tanzer, Michaela, 5122 Überackern (AT)
(74) Vertreter: Deffner-Lehner, Maria

(56) Entgegenhaltungen:
- DE-A1-102011 079 751
- JP-A- H11 228 698

## Beschreibung

Die Erfindung betrifft ein Verfahren zur Stabilisierung von Siloxanen.

US 5,569,688 beschreibt die Zugabe von Ammoniak oder einer Ammoniak freisetzenden Verbindung zu additionsvernetzenden Siliconmassen, die Platinkatalysatoren und Siloxane mit Alkenylgruppen enthalten, um den Compression Set zu reduzieren ohne dabei die Vernetzbarkeit zu stören.

Aus US 2007/0066783 A1 (DE 10 2005 045 336 A1) ist die Zugabe von Ammoniak oder einer Ammoniak freisetzenden Verbindung zu additionsvernetzenden Siliconmassen bekannt, die pyrogen hergestellte, hydrophobe Kieselsäure und SiH-Vernetzer enthalten, um die Lagerstabilität zu verbessern, wobei mit Lagerstabilität eine weitgehend gleichbleibende Fließfähigkeit und Viskosität der Siliconmassen gemeint ist.

In US 2005/0137362 A1 (EP 1 544 252 A1) werden organische Amine zu Hydroxygruppen enthaltenden harzartigen Organopolysiloxanen zugesetzt, die Restmengen an Si-gebunden Chloratomen enthalten, um die Lagerstabilität zu erhöhen, insbesondere Viskositätssteigerungen bis hin zum Gelieren zu vermeiden. Die Restmengen an Si-gebunden Chloratomen sind nachteilig, da sie z.B. mit Silanolgruppen Si-OH, Luftfeuchtigkeit, Restspuren von Wasser und Alkohol über die Lagerdauer zu Chlorwasserstoff, welcher als Kondensationskatalysator zu Viskositätssteigerungen bis hin zum Gelieren der harzartigen Organopolysiloxane führen kann.

Die Aminogruppen enthaltenden Verbindungen enthalten 1, 2 oder 3 organische Reste an der Aminogruppe und werden in hohen Mengen, beispielsweise in Mengen von 100 Gew.-ppm eingesetzt.

DE 10 2011 079 751 A1 beschreibt die Entfernung von cyclischen Siloxanen aus kurzkettigen Siloxanen mit endständigen Hydroxygruppen mithilfe eines Wasserdampfstrom. Die erhaltenen Siloxane sind aber über keinen längeren Zeitraum hinweg lagerstabil, denn die Si-gebundenen Hydroxygruppen Si-OH sind instabil und bilden durch Selbstkondensation unter Eliminierung von Wasser Si-O-Si Siloxanbindungen aus. Diese mangelnde Stabilität hat die Bildung von Wasser, die Trübung der Substanz, eine Cyclenbildung und Kettenverlängerung zur Folge, was nachteilig ist.

Es bestand die Aufgabe ein Verfahren bereitzustellen, bei dem die oben genannten Nachteile vermieden werden, bei dem die Lagerstabilität von Siloxanen mit endständigen Si-gebundenen Hydroxygruppen verbessert wird und bei dem insbesondere auch der Gehalt an cyclischen Siloxanen gering ist. Die Aufgabe wird durch die Erfindung gelöst.

Gegenstand der Erfindung ist ein Verfahren zur Stabilisierung von Siloxanen mit endständigen Si-gebundenen Hydroxygruppen, die einen Gehalt an cyclischen Siloxanen von höchstens 5 Gew.-%, bezogen auf das Gesamtgewicht der Siloxane mit endständigen Si-gebundenen Hydroxygruppen, aufweisen, durch Zugabe von Ammoniak in gasförmiger Form oder gelöst in einem protischen oder aprotischen Lösungsmittel oder in Form einer Ammoniak freisetzenden Verbindung in Mengen von mindestens 0,01 Gew.-ppm, vorzugsweise mindestens 1 Gew.-ppm, bevorzugt mindestens 2,5 Gew.-ppm, und höchstens 100 Gew.-ppm, vorzugsweise höchstens 20 Gew.-ppm, bevorzugt höchstens 10 Gew.-ppm, jeweils berechnet als Ammoniak und bezogen auf das Gesamtgewicht der Siloxane mit endständigen Hydroxygruppen.

Die Siloxane mit endständigen Si-gebundenen Hydroxygruppen weisen eine Kettenlänge von vorzugsweise 2 bis 1000, bevorzugt 2 bis 150 Si-Atomen auf.

Die cyclischen Siloxane weisen vorzugsweise 3 bis 20, bevorzugt 3 bis 6 Si-Atome auf.

Die Siloxane mit endständigen Si-gebundenen Hydroxygruppen weisen einen Gehalt an cyclischen Siloxanen von vorzugsweise höchstens 2 Gew.-%, bezogen auf das Gesamtgewicht der Siloxane mit endständigen Si-gebundenen Hydroxygruppen, auf.

Vorzugsweise wird Ammoniak in gasförmiger Form eingesetzt.

Ammoniak in gasförmiger Form wird dabei vorzugsweise in Mengen von 1 bis 20 Gew.-ppm, bevorzugt 2,5 bis 10 Gew.-ppm, bezogen auf das Gesamtgewicht der Siloxane mit endständigen Si-gebundenen Hydroxygruppen, eingesetzt.

Ein Beispiel für ein protisches Lösungsmittel, in dem Ammoniak in gelöster Form vorliegt, ist Wasser.

Beispiele für aprotische Lösungsmittel, in dem Ammoniak in gelöster Form vorliegt, sind gesättigte und ungesättigte Kohlenwasserstoffe in linearer und cyclischer Form, wie Hexan, Pentan, Cyclohexan und Petrolether; aromatische Kohlenwasserstoffe, wie Xylol, Toluol und Benzol; halogenierte aliphatische und aromatische Kohlenwasserstoffe, wie Dichlormethan, Trichlormethan, 1,2-Dichlorethan und Chlorbenzol; lineare und cyclische Ether, wie Diethylether, Tetrahydrofuran, Methyl-tert.-butylether; Ketone, wie Aceton und Methylethylketon; und Ester, wie Ethylacetat.

Die Lösungsmittel können einzeln oder in Form von Gemischen von Lösungsmitteln eingesetzt werden.

Beispiele für Ammoniak freisetzende Verbindungen sind, Harnstoff, Harnsäure, Ammoniumsalze, Silazane, sowie Derivate eines primären Amids, wie beispielsweise Carbamate, Carbaminate, Semicarbazide und Semicarbazone, beziehungsweise deren organische oder anorganische Ester.

Die Ammoniak freisetzenden Verbindungen können einzeln oder in Form von Gemischen von Ammoniak freisetzenden Verbindungen eingesetzt werden.

Wird bei dem Verfahren zur Stabilisierung von Siloxanen Ammoniak in gasförmiger Form eingesetzt, kann es bei einem Druck von 100 000 bis 1 000 000 Pa, bevorzugt wischen 100 000 bis 400 000 Pa, durchgeführt werden.

Vorzugsweise wird das Verfahren bei einer Temperatur von 10 bis 100°C, bevorzugt 20 bis 50°C, durchgeführt.

Ammoniak in gasförmiger Form oder gelöst in einem protischen oder aprotischen Lösungsmittel oder in Form einer Ammoniak freisetzenden Verbindung kann in jeglicher Art und Weise und an den verschiedensten Stellen in das System eingebracht werden.

Das Verfahren zur Stabilisierung der Siloxane mit endständigen Si-gebundenen Hydroxygruppen kann batchweise, halbkontinuierlich oder vollkontinuierlich durchgeführt werden.

Die beim Verfahren zur Stabilisierung eingesetzten Siloxane mit endständigen Si-gebundenen Hydroxygruppen, die einen Gehalt an cyclischen Siloxanen von höchstens 5 Gew.-%, vorzugsweise von höchstens 2 Gew.-%, bezogen auf das Gesamtgewicht der Siloxane mit endständigen Si-gebundenen Hydroxygruppen, aufweisen, werden vorzugsweise durch ein Verfahren erhalten, bei dem zur Entfernung von cyclischen Siloxanen aus einer Mischung, die cyclische Siloxane und Siloxane mit endständigen Si-gebundenen Hydroxygruppen enthält, die cyclischen Siloxane und ein geringer Anteil von sehr kurzkettigen, leichtflüchtigen Siloxanen bei einem Druck von 100 bis 50 000 Pa, vorzugsweise 1 000 bis 10 000 Pa, bevorzugt 2 000 bis 3 000 Pa, mit einem Wasserdampfstrom abgetrennt werden. Vorzugsweise wird das Verfahren zur Entfernung der cyclischen Siloxane bei einer Temperatur von 50 bis 200°C, bevorzugt 140 bis 180°C, besonders bevorzugt 155 bis 180°C, durchgeführt.

Bevorzugt ist daher ein Verfahren zur Stabilisierung von Siloxanen bei dem
i) in einem ersten Schritt bei einem Druck von 100 bis 50 000 Pa mit einem Wasserdampfstrom die cyclischen Siloxane aus einer Mischung, die cyclische Siloxane und Siloxane mit endständigen Si-gebundenen Hydroxygruppen enthält, abgetrennt werden, und
ii) in einem zweiten Schritt zu den so erhaltenen Siloxanen mit endständigen Si-gebundenen Hydroxygruppen, die einen Gehalt an cyclischen Siloxanen von höchstens 5 Gew.-%, vorzugsweise von höchstens 2 Gew.-%, bezogen auf das Gesamtgewicht der Siloxane mit endständigen Si-gebundenen Hydroxygruppen, aufweisen, Ammoniak in gasförmiger Form oder gelöst in einem protischen oder aprotischen Lösungsmittel oder in Form einer Ammoniak freisetzenden Verbindung in Mengen von mindestens 0,01 Gew.-ppm, vorzugsweise mindestens 1 Gew.-ppm, bevorzugt mindestens 2,5 Gew.-ppm, und höchstens 100 Gew.-ppm, vorzugsweise höchstens 20 Gew.-ppm, bevorzugt höchstens 10 Gew.-ppm, jeweils berechnet als Ammoniak und bezogen auf das Gesamtgewicht der Siloxane mit endständigen Si-gebundenen Hydroxygruppen, zur Stabilisierung zugegeben wird.

Vorzugsweise wird im Schritt i) neben den cyclischen Siloxanen ein geringer Anteil von sehr kurzkettigen, leichtflüchtigen Siloxanen ebenfalls entfernt.

Die cyclischen Siloxane weisen vorzugsweise die allgemeine Formel (I)

(R¹R²SiO)ₘ (I)

auf, wobei
- **R¹**: einen Alkylrest mit 1 bis 12 Kohlenstoffatomen bedeutet,
- **R²**: einen Alkylrest mit 1 bis 12 Kohlenstoffatomen oder einen Arylrest mit 5 bis 30 Kohlenstoffatomen oder einen Alkenylrest mit 2 bis 12 Kohlenstoffatomen bedeutet und
- **m**: ganzzahlige Werte von 3 bis 20, bevorzugt 3 bis 6,
bedeuten.

Beispiele für Alkyreste **R¹** sind der Methyl-, Ethyl-, Propyl-, tert.- Butyl- und Hexylrest, wobei der Methylrest bevorzugt ist.

Beispiele für Reste **R²** sind Alkylreste, wie der Methyl-, Ethyl-, Propyl-, tert.-Butyl- und Hexylrest; Arylreste, wie der Phenyl-, Tolyl-, Xylyl- und Naphthylrest; und Alkenylreste, wie der Vinylrest. Bevorzugt ist es, wenn jeder Rest **R²** unabhängig voneinander ausgewählt ist aus Methyl- und Vinylrest. Besonders bevorzugt ist es, wenn **R²** ausgewählt ist aus Methyl- und Vinylrest und jeder Rest **R²** das Gleiche ist, dass also alle Reste **R²** entweder Methyl- oder Vinylreste sind.

Der Anteil der cyclischen Siloxane mit 3 bis 6 Si-Atomen, vorzugsweise cyclische Siloxane gemäß Formel (I) mit m gleich 3 bis 6, in den Siloxanen mit endständigen Si-gebundenen Hydroxygruppen liegt nach Anwendung des Verfahrens zur Entfernung der cyclischen Siloxane vorzugsweise bei weniger als 50 000 Gew.-ppm, vorzugsweise bei weniger als 20 000 Gew.-ppm, bevorzugt bei weniger als 10 000 Gew.-ppm, jeweils bezogen auf das Gesamtgewicht der Siloxane mit endständigen Si-gebundenen Hydroxygruppen.

Die Siloxane mit endständigen Si-gebundenen Hydroxygruppen weisen vorzugsweise die allgemeine Formel (II)

HO(R³R⁴SiO)ₙH (II)

auf, wobei
- **R³**: eine Alkylgruppe mit 1 bis 12 Kohlenstoffatomen bedeutet,
- **R⁴**: eine Alkylgruppe mit 1 bis 12 Kohlenstoffatomen oder eine Arylgruppe mit 5 bis 30 Kohlenstoffatomen oder eine Alkenylgruppe mit 2 bis 12 Kohlenstoffatomen bedeutet und
- **n**: ganzzahlige Werte von 2 bis 1000, bevorzugt 2 bis 150,
bedeuten.

Beispiele für **R³** und bevorzugte Bedeutungen für **R³** sind vorstehend für **R¹** aufgeführt. Beispiele für **R⁴** und bevorzugte Bedeutungen für **R⁴** sind vorstehend für **R²** aufgeführt.

Die Formel (II) können zusätzlich zu den D-Einheiten, also Einheiten der Formel R³R⁴SiO, T-Einheiten, also Einheiten der Formel R*SiO_{3/2}, wobei R* ein Rest R³ oder R⁴ bedeutet, wobei R³ und R⁴ die oben dafür angegebene Bedeutung haben, und Q-Einheiten, also Einheiten der Formel SiO₂, enthalten, wobei die T- und Q-Einheiten in Mengen von 0 bis 10 Gew.-%, bevorzugt 0 bis 5 Gew.-%, jeweils bezogen auf das Gesamtgewicht der Siloxane mit endständigen Si-gebundenen Hydroxygruppen, enthalten sind.

Die Siloxane mit endständigen Si-gebundenen Hydroxygruppen können durch Hydrolyse von Chlorsilanen erhalten werden. Beispielsweise können Siloxane der Formel (II) durch Hydrolyse von Dimethyldichlorsilan oder Methylvinyldichlorsilan oder deren Gemische erhalten werden. Das resultierende Produkt wird von der wässrigen Phase getrennt und bevorzugt mittels Destillation aufgereinigt. Das Produkt der Hydrolyse ist eine Mischung aus cyclischen Siloxanen und Siloxanen mit endständigen Si-gebundenen Hydroxygruppen.

Da bei der Hydrolyse cyclische Siloxane, wie beispielsweise Hexamethylcyclotrisiloxan D3, Octamethylcyclotetrasiloxan D4, Decamethylcyclopentasiloxan D5 und Dodecamethylcyclohexasiloxan D6 anfallen, ist es vorteilhaft deren Gehalt zu reduzieren.

Besonders bevorzugt ist daher ein Verfahren zur Stabilisierung von Siloxanen bei dem
i) in einem ersten Schritt zur Entfernung von cyclischen Siloxanen aus einer Mischung, die cyclische Siloxane und Siloxane mit endständigen Si-gebundenen Hydroxygruppen enthält, die cyclischen Siloxane bei einem Druck von 100 bis 50 000 Pa, bevorzugt 1 000 bis 10 000 Pa, und einer Temperatur von 140 bis 180°C, bevorzugt 155 bis 180°C, mit einem Wasserdampfstrom abgetrennt werden, wobei Siloxane mit endständigen Si-gebundenen Hydroxygruppen erhalten werden, bei denen der Anteil an cyclischen Siloxanen mit 3 bis 6 Si-Atomen bei weniger als 50 000 Gew.-ppm, vorzugsweise bei weniger als 20 000 Gew.-ppm, bevorzugt bei weniger als 10 000 Gew.-ppm, jeweils bezogen auf das Gesamtgewicht der Siloxane mit endständigen Si-gebundenen Hydroxygruppen, liegt und
ii) in einem zweiten Schritt zu den so im ersten Schritt erhaltenen Siloxanen mit endständigen Si-gebundenen Hydroxygruppen, Ammoniak in gasförmiger Form oder gelöst in einem protischen oder aprotischen Lösungsmittel oder in Form einer Ammoniak freisetzenden Verbindung in Mengen von mindestens 0,01 Gew.-ppm, vorzugsweise mindestens 1 Gew.-ppm, bevorzugt mindestens 2,5 Gew.-ppm, und höchstens 100 Gew.-ppm, vorzugsweise höchstens 20 Gew.-ppm, bevorzugt höchstens 10 Gew.-ppm, jeweils berechnet als Ammoniak und bezogen auf das Gesamtgewicht der Siloxane mit endständigen Si-gebundenen Hydroxygruppen, zur Stabilisierung zugegeben wird.

Die Entfernung der cyclischen Siloxane erfolgt vorzugsweise mithilfe eines Wasserdampfstroms, wie durch Wasserdampfdestillation, beispielsweise nach einem Verfahren, wie es in DE 10 2011 079 751 A1 beschrieben ist. Bevorzugt wird das Verfahren im Gegensatz zu DE 10 2011 079 751 A1 unter Vakuum, also bei 100 bis 50 000 Pa, vorzugsweise bei 1 000 bis 10 000 Pa,

bevorzugt 20 bis 30 hPa, und bevorzugt bei höheren Temperaturen, also bei 50 bis 200°C, vorzugsweise bei 140 bis 180°C, bevorzugt 155 bis 180°C, durchgeführt.

Das Verfahren zur Entfernung der cyclischen Siloxane kann batchweise, halbkontinuierlich oder vollkontinuierlich durchgeführt werden.

Das abgetrennte Gemisch aus Wasserdampf und cyclischen Siloxanen wird durch dem Fachmann bekannte Methoden niedergeschlagen, beispielsweise durch Kondensation in einem Kühler. Die bei Temperaturen niedriger als der Prozesstemperatur in Wasser schlechter löslichen cyclischen Siloxane werden dann vorzugsweise durch physikalische Trennoperationen, wie Phasentrennung, vom kondensierten Wasserdampf abgetrennt. Die cyclischen und der geringe Anteil sehr kurzkettiger, leichtflüchtiger Siloxane können dann vorzugsweise im Herstellprozess der Siloxane wiederverwendet werden.

### Beispiel 1

Das Rohprodukt aus dem Hydrolyseprozess, bestehend aus einer Mischung von cyclischen Siloxanen der Formel (I) mit R¹ = R² = CH₃ und linearen Siloxane mit endständigen Si-gebundenen Hydroxygruppen der Formel (II) mit R³ = R⁴ = CH₃, mit einem Si-OH Gehalt von 2,36 Gew.-% und einer Stoffzusammensetzung, welcher Tabelle 1 entnommen werden kann, wird im ersten Schritt zur Entfernung cyclischer Siloxane mit einem Durchfluss von 600 kg/h destillativ bei 160°C und 2 000 Pa mit einem Wasserdampfstrom von 0,9 m³/h aufgereinigt. Das Destillat wird in den Herstellprozess der Siloxane zurückgeschleust.

Das resultierende Produkt zeigt einen Si-OH Gehalt von 3,6 Gew.-%, und eine Stoffzusammensetzung, welche Tabelle 2 entnommen werden kann. In einem zweiten Schritt wird dieser 50°C heißen Ausgangsmischung, welche mit einem kontinuierlichen fließenden Strom von 350 kg/h und einem Druck von 101 300 bis 120 000 Pa transportiert wird, gasförmiger Ammoniak mit einem Ausgangsdruck von 300 000 bis 400 000 Pa bei 20°C und einer Durchflussgeschwindigkeit von ca. 4 L/h aus einem Druckbehälter eingeleitet. Das stabilisierte Produkt enthält einen Ammoniakgehalt von 20 Gew.-ppm und wird in Gebinde abgefüllt. Der Ammoniakgehalt wird mittels Titration bestimmt: Probelösung in Toluol/Isopropanol, Indikatorlösung Tetrabromphenolphthaleinethylester 0,2%ig in Chloroform, Maßlösung 0,01 mol/L ethanolische HCl

**Tabelle 1: Stoffzusammensetzung des Hydrolysates vor Destillation**

| Hexamethylcyclotrisiloxan [Gew.-%] | Octamethylcyclotetrasiloxan [Gew.-%] | Decamethylcyclopentasiloxan [Gew.-%] | Dodecamethylcyclohexasiloxan [Gew.-%] | Polysiloxan der Formel II mit R¹ = R² = CH₃ und einer mittleren Kettenlänge von n = 12,7 [Gew.-%] |
|---|---|---|---|---|
| 1, 62 % | 27,3 % | 2,15 % | 1,18 % | 67,5 % |

| | | | | |
|---|---|---|---|---|
| Bestimmung mittels ¹H-NMR und ²⁹ Si-NMR | | | | |

**Tabelle 2: Stoffzusammensetzung nach Destillation**

| Hexamethylcyclotrisiloxan [Gew.-ppm] | Octamethylcyclotetrasiloxan [Gew.-ppm] | Decamethylcyclopentasiloxan [Gew.-ppm] | Dodecamethylcyclohexasiloxan [Gew.-ppm] | Polysiloxan der Formel II mit R¹ = R² = CH₃ und einer mittleren Kettenlänge von n = 18,6 [Gew.-%] |
|---|---|---|---|---|
| < 80 ppm | < 60 ppm | 1540 ppm | 3740 ppm | 99,5 % |

| | | | | |
|---|---|---|---|---|
| Zu Tabelle 2: Methode zur Bestimmung des Gehaltes an cyclischen Siloxanen: Gas-Chromatographie (nach der Vorschrift von: CES - Centre Europeen des Silicones, Title: Quantification of residual amounts of Volatile Siloxanes in silicone products, Issue date: April 16, 2013) Methode zur Bestimmung der mittleren Kettenlänge: angelehnt an DIN 55672-1: Gelpermeationschromatographie (GPC). Teil 1: Tetrahydrofuran (THF) als Elutionsmittel (Als Eluent wird in diesem Beispiel jedoch Toluol anstatt THF herangezogen.) bzw. ISO 16014-1:2012(E), Plastics - Determination of average molecular mass and molecular mass distribution of polymers using size-exclusion chromatography - Part 1: General principles, und ISO 16014-3:2012(E), Plastics - Determination of average molecular mass and molecular mass distribution of polymers using size-exclusion chromatography - Part 3: Low-temperature method. zusätzliche Angaben zur Methode: Säulen: Agilent PLGel 10 000 Å + 500 Å + 100 Å (Säulenmaterial und Porengrößenverteilung sowie Molmassenmessbereich - 600 000 - 10 000 / 30 000 - 500 / - 4 000), je 300 x 7.5 mm, 5 µm (Länge x Durchmesser, Partikeldurchmesser der stationären Phase). Eluent: Toluol Fluss: 1.0 mL/min Säulentemperatur: 45°C Detektor: RI Kalibrierung: Polystyrol-Standards, 3.Ordnung Interner Standard: Flussmarker Injektionsvolumen: 100 µL Probenkonz.:3 mg/mL gelöst in Toluol | | | | |

### Beispiel 2

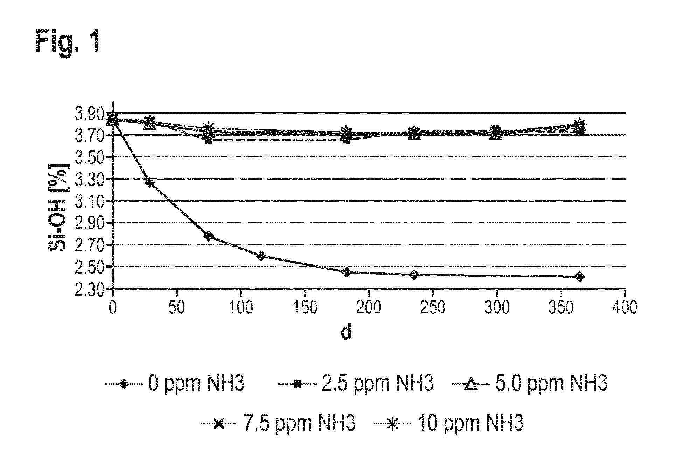

Ein analog Beispiel 1 hergestelltes Produkt mit einem Si-OH Gehalt von 3,85 Gew.-% und einem Ammoniakgehalt von 18,3 Gew.-ppm wird mit noch ammoniakfreiem (0 Gew.-ppm) Material der Zusammensetzung gemäß Tabelle 2 auf Ammoniakgehalte zwischen 2,5 und 10 Gew.-ppm verdünnt. Anschließend wird das Produkte über mehrere Monate bei Raumtemperatur gelagert und im regelmäßigen Abstand einer Analyse zur quantitativen Bestimmung des Si-OH Gehaltes unterzogen. Die Ergebnisse sind in Fig. 1 zusammengefasst.

Fig. 1 zeigt die Abhängigkeit des Si-OH Gehaltes [Gew.-%] mit der Zeit d [in Tagen], welches ein Maß für die Lagerstabilität ist, bei unterschiedlichen Ammoniakkonzentrationen [Gew.-ppm]. Bestimmt wurde der Si-OH Gehalt mittels FT-NIR-Spektroskopie bei 25°C (Referenzmethode: ¹H-NMR).

Dabei ist zu erkennen, dass ohne Ammoniakstabilisierung (0 Gew.-ppm NH₃) der Si-OH Gehalt rasant sinkt und bereits nach 2 Monaten um 25% verliert. Dies geht mit dem Reaktivitätsverlust der Endgruppen, der Abspaltung von Wasser und der Verlängerung der Siloxankettenlänge einher. Schon Ammoniakkonzentrationen um 2,5 Gew.-ppm und größer zeigen eine merkliche Stabilitätserhöhung. Das Material zeigt noch nach 8 Monaten 97% des anfänglichen Si-OH Gehaltes und ist auch über 12 Monaten hinweg stabil.

## Patentansprüche

1. Verfahren zur Stabilisierung von Siloxanen mit endständigen Hydroxygruppen, die einen Gehalt an cyclischen Siloxanen von höchstens 5 Gew.-%, bezogen auf das Gesamtgewicht der Siloxane mit endständigen Hydroxygruppen, aufweisen, durch Zugabe von Ammoniak in gasförmiger Form oder gelöst in einem protischen oder aprotischen Lösungsmittel oder in Form einer Ammoniak freisetzenden Verbindung in Mengen von mindestens 0,01 Gew.-ppm, vorzugsweise mindestens 1 Gew.-ppm, bevorzugt mindestens 2,5 Gew.-ppm, und höchstens 100 Gew.-ppm, vorzugsweise höchstens 20 Gew.-ppm, bevorzugt höchstens 10 Gew.-ppm, jeweils berechnet als Ammoniak und bezogen auf das Gesamtgewicht der Siloxane mit endständigen Hydroxygruppen.

2. Verfahren nach Anspruch 1, **dadurch gekennzeichnet, dass** Ammoniak in gasförmiger Form eingesetzt wird.

3. Verfahren nach Anspruch 2, **dadurch gekennzeichnet, dass** Ammoniak in Mengen von mindestens 0,01 Gew.-ppm, vorzugsweise mindestens 1 Gew.-ppm, bevorzugt mindestens 2,5 Gew.-ppm, und höchstens 100 Gew.-ppm, vorzugsweise höchstens 20 Gew.-ppm, bevorzugt höchstens 10 Gew.-ppm, jeweils bezogen auf das Gesamtgewicht der Siloxane mit endständigen Si-gebundenen Hydroxygruppen, eingesetzt wird.

4. Verfahren nach Anspruch 2 oder 3, **dadurch gekennzeichnet, dass** es bei einem Druck von 100 000 bis 1 000 000 Pa, bevorzugt bei einem Druck von 100 000 bis 400 000 Pa, und einer Temperatur von 10 bis 100°C, bevorzugt einer Temperatur von 20 bis 50°C, durchgeführt wird.

5. Verfahren zur Stabilisierung von Siloxanen nach einem der Ansprüche 1 bis 4, **dadurch gekennzeichnet, dass**
i) in einem ersten Schritt zur Entfernung von cyclischen Siloxanen aus einer Mischung, die cyclische Siloxane und Siloxane mit endständigen Hydroxygruppen enthält, die cyclischen Siloxane bei einem Druck von 100 bis 50 000 Pa mit einem Wasserdampfstrom abgetrennt werden, und
ii) in einem zweiten Schritt zu den so erhaltenen Siloxanen mit endständigen Si-gebundenen Hydroxygruppen, die einen Gehalt an cyclischen Siloxanen von höchstens 5 Gew.-%, vorzugsweise höchstens 2 Gew.-%, bezogen auf das Gesamtgewicht der Siloxane mit endständigen Hydroxygruppen, aufweisen, Ammoniak in gasförmiger Form oder gelöst in einem protischen oder aprotischen Lösungsmittel oder in Form einer Ammoniak freisetzenden Verbindung in Mengen von mindestens 0,01 Gew.-ppm, vorzugsweise mindestens 1 Gew.-ppm, bevorzugt mindestens 2,5 Gew.-ppm, und höchstens 100 Gew.-ppm, vorzugsweise höchstens 20 Gew.-ppm, bevorzugt höchstens 10 Gew.-ppm, jeweils berechnet als Ammoniak und bezogen auf das Gesamtgewicht der Siloxane mit endständigen Hydroxygruppen, zur Stabilisierung zugegeben wird.

6. Verfahren nach einem der Ansprüche 1 bis 5, **dadurch gekennzeichnet, dass** die cyclischen Siloxane die allgemeine Formel (I)
(R¹R²SiO)ₘ (I)
aufweisen, wobei
**R¹** eine Alkylgruppe mit 1 bis 12 Kohlenstoffatomen bedeutet,
**R²** eine Alkylgruppe mit 1 bis 12 Kohlenstoffatomen oder eine Arylgruppe mit 5 bis 30 Kohlenstoffatomen oder eine Alkenylgruppe mit 2 bis 12 Kohlenstoffatomen bedeutet und
**m** ganzzahlige Werte von 3 bis 20, bevorzugt 3 bis 6,
bedeuten.

7. Verfahren nach einem der Ansprüche 1 bis 6, **dadurch gekennzeichnet, dass** die Siloxane mit endständigen Hydroxygruppen die allgemeine Formel (II)
HO(R³R⁴SiO)ₙH (II)
aufweisen, wobei
**R³** eine Alkylgruppe mit 1 bis 12 Kohlenstoffatomen bedeutet,
**R⁴** eine Alkylgruppe mit 1 bis 12 Kohlenstoffatomen oder eine Arylgruppe mit 5 bis 30 Kohlenstoffatomen oder eine Alkenylgruppe mit 2 bis 12 Kohlenstoffatomen bedeutet und
**n** ganzzahlige Werte von 2 bis 1000
bedeuten.

8. Verfahren nach einem der Ansprüche 5 bis 7, **dadurch gekennzeichnet, dass** der Verfahrensdruck im Schritt i) 1 000 bis 10 000 Pa, bevorzugt 2 000 bis 3 000 Pa, beträgt.

9. Verfahren nach einem der Ansprüche 5 bis 8, **dadurch gekennzeichnet, dass** die Verfahrenstemperatur im Schritt i) 50 bis 200°C, vorzugsweise 140 bis 180°C, bevorzugt 155 bis 180°C, beträgt.

10. Verfahren zur Stabilisierung von Siloxanen nach einem der Ansprüche 1 bis 9, **dadurch gekennzeichnet, dass**
i) in einem ersten Schritt zur Entfernung von cyclischen Siloxanen aus einer Mischung, die cyclische Siloxane und Siloxane mit endständigen Si-gebundenen Hydroxygruppen enthält, die cyclischen Siloxane bei einem Druck von 100 bis 50 000 Pa und einer Temperatur von 140 bis 180°C, bevorzugt 155 bis 180°C, mit einem Wasserdampfstrom abgetrennt werden, wobei Siloxane mit endständigen Si-gebundenen Hydroxygruppen erhalten werden, bei denen der Anteil an cyclischen Siloxanen mit 3 bis 6 Si-Atomen bei weniger als 50 000 Gew.-ppm, vorzugsweise bei weniger als 20 000 Gew.-ppm, bevorzugt bei weniger als 10 000 Gew.-ppm, jeweils bezogen auf das Gesamtgewicht der Siloxane mit endständigen Si-gebundenen Hydroxygruppen, liegt und
ii) in einem zweiten Schritt zu den so im ersten Schritt erhaltenen Siloxanen mit endständigen Si-gebundenen Hydroxygruppen, Ammoniak in gasförmiger Form oder gelöst in einem protischen oder aprotischen Lösungsmittel oder in Form einer Ammoniak freisetzenden Verbindung in Mengen von mindestens 0,01 Gew.-ppm, vorzugsweise mindestens 1 Gew.-ppm, bevorzugt mindestens 2,5 Gew.-ppm, und höchstens 100 Gew.-ppm, vorzugsweise höchstens 20 Gew.-ppm, bevorzugt höchstens 10 Gew.-ppm, jeweils berechnet als Ammoniak und bezogen auf das Gesamtgewicht der Siloxane mit endständigen Si-gebundenen Hydroxygruppen, zur Stabilisierung zugegeben wird.

11. Verfahren nach einem der Ansprüche 1 bis 10, **dadurch gekennzeichnet, dass** das Verfahren batchweise, halbkontinuierlich oder vollkontinuierlich durchgeführt wird.

## Claims

1. Method of stabilizing siloxanes having terminal hydroxy groups, which have a content of cyclic siloxanes of not more than 5% by weight, based on the total weight of the siloxanes having terminal hydroxy groups, by addition of ammonia in gaseous form or as a solution in a protic or aprotic solvent or in the form of an ammonia-releasing compound in amounts of at least 0.01 ppm by weight, preferably at least 1 ppm by weight, more preferably at least 2.5 ppm by weight, and not more than 100 ppm by weight, preferably not more than 20 ppm by weight, more preferably not more than 10 ppm by weight, in each case calculated as ammonia and based on the total weight of the siloxanes having terminal hydroxy groups.

2. Method according to Claim 1, **characterized in that** ammonia is used in gaseous form.

3. Method according to Claim 2, **characterized in that** ammonia is used in amounts of at least 0.01 ppm by weight, preferably at least 1 ppm by weight, more preferably at least 2.5 ppm by weight, and not more than 100 ppm by weight, preferably not more than 20 ppm by weight, more preferably not more than 10 ppm by weight, in each case based on the total weight of the siloxanes having terminal Si-bonded hydroxy groups.

4. Method according to Claim 2 or 3, **characterized in that** it is carried out at a pressure of from 100 000 to 1 000 000 Pa, preferably at a pressure of from 100 000 to 400 000 Pa, and a temperature of from 10 to 100°C, preferably a temperature of from 20 to 50°C.

5. Method of stabilizing siloxanes according to any of Claims 1 to 4, **characterized in that**
i) in a first step, in order to remove cyclic siloxanes from a mixture containing cyclic siloxanes and siloxanes having terminal hydroxy groups, the cyclic siloxanes are separated off by means of a stream of steam at a pressure of from 100 to 50 000 Pa, and
ii) in a second step, ammonia in gaseous form or as a solution in a protic or aprotic solvent or in the form of an ammonia-releasing compound is added in amounts of at least 0.01 ppm by weight, preferably at least 1 ppm by weight, more preferably at least 2.5 ppm by weight, and not more than 100 ppm by weight, preferably not more than 20 ppm by weight, more preferably not more than 10 ppm by weight, in each case calculated as ammonia and based on the total weight of the siloxanes having terminal hydroxy groups, to the resulting siloxanes having terminal Si-bonded hydroxy groups having a content of cyclic siloxanes of not more than 5% by weight, preferably not more than 2% by weight, based on the total weight of the siloxanes having terminal hydroxy groups, in order to effect stabilization.

6. Method according to any of Claims 1 to 5, **characterized in that** the cyclic siloxanes have the general formula (I)
(R¹R²SiO)ₘ (I)
where
**R¹** is an alkyl group having from 1 to 12 carbon atoms,
**R²** is an alkyl group having from 1 to 12 carbon atoms or an aryl group having from 5 to 30 carbon atoms or an alkenyl group having from 2 to 12 carbon atoms and
**m** is an integer from 3 to 20, preferably from 3 to 6.

7. Method according to any of Claims 1 to 6, **characterized in that** the siloxanes having terminal hydroxy groups have the general formula (II)
HO(R³R⁴SiO)ₙH (II)
where
**R³** is an alkyl group having from 1 to 12 carbon atoms,
**R⁴** is an alkyl group having from 1 to 12 carbon atoms or an aryl group having from 5 to 30 carbon atoms or an alkenyl group having from 2 to 12 carbon atoms and
**n** is an integer from 2 to 1000.

8. Method according to any of Claims 5 to 7, **characterized in that** the pressure in step i) is from 1000 to 10 000 Pa, preferably from 2000 to 3000 Pa.

9. Method according to any of Claims 5 to 8, **characterized in that** the temperature in step i) is from 50 to 200°C, preferably from 140 to 180°C, more preferably from 155 to 180°C.

10. Method of stabilizing siloxanes according to any of Claims 1 to 9, **characterized in that**
i) in a first step, in order to remove cyclic siloxanes from a mixture containing cyclic siloxanes and siloxanes having terminal Si-bonded hydroxy groups, the cyclic siloxanes are separated off by means of a stream of steam at a pressure of from 100 to 50 000 Pa and a temperature of from 140 to 180°C, preferably from 155 to 180°C, giving siloxanes having terminal Si-bonded hydroxy groups in which the proportion of cyclic siloxanes having from 3 to 6 Si atoms is less than 50 000 ppm by weight, preferably less than 20 000 ppm by weight, more preferably less than 10 000 ppm by weight, in each case based on the total weight of the siloxanes having terminal Si-bonded hydroxy groups, and
ii) in a second step, ammonia in gaseous form or as a solution in a protic or aprotic solvent or in the form of an ammonia-releasing compound is added in amounts of at least 0.01 ppm by weight, preferably at least 1 ppm by weight, more preferably at least 2.5 ppm by weight, and not more than 100 ppm by weight, preferably not more than 20 ppm by weight, more preferably not more than 10 ppm by weight, in each case calculated as ammonia and based on the total weight of the siloxanes having terminal Si-bonded hydroxy groups, to the siloxanes having terminal Si-bonded hydroxy groups obtained in the first step, in order to effect stabilization.

11. Method according to any of Claims 1 to 10, **characterized in that** the method is carried out batchwise, semicontinuously or fully continuously.

## Revendications

1. Procédé pour la stabilisation de siloxanes à groupes hydroxy en bout de chaîne, qui présentent une teneur en siloxanes cycliques d'au maximum 5 % en poids, par rapport au poids total des siloxanes à groupes hydroxy en bout de chaîne, par addition d'ammoniac sous forme gazeuse ou dissous dans un solvant protique ou aprotique ou sous forme d'un composé libérant de l'ammoniac, en des quantités d'au moins 0,01 ppm en poids, de préférence d'au moins 1 ppm en poids, de façon particulièrement préférée d'au moins 2,5 ppm en poids et d'au maximum 100 ppm en poids, de préférence d'au maximum 20 ppm en poids, de façon particulièrement préférée d'au maximum 10 ppm en poids, chaque fois calculé en tant qu'ammoniac et par rapport au poids total des siloxanes à groupes hydroxy en bout de chaîne.

2. Procédé selon la revendication 1, **caractérisé en ce qu'**on utilise l'ammoniac sous forme gazeuse.

3. Procédé selon la revendication 2, **caractérisé en ce qu'**on utilise l'ammoniac en des quantités d'au moins 0,01 ppm en poids, de préférence d'au moins 1 ppm en poids, de façon particulièrement préférée d'au moins 2,5 ppm en poids et d'au maximum 100 ppm en poids, de préférence d'au maximum 20 ppm en poids, de façon particulièrement préférée d'au maximum 10 ppm en poids, chaque fois par rapport au poids total des siloxanes à groupes hydroxy liés à Si en bout de chaîne.

4. Procédé selon la revendication 2 ou 3, **caractérisé en ce qu'**on l'effectue sous une pression de 100 000 à 1 000 000 Pa, de préférence sous une pression de 100 000 à 400 000 Pa, et à une température de 10 à 100 0 °C, de préférence à une température de 20 à 50 °C.

5. Procédé pour la stabilisation de siloxanes selon l'une quelconque des revendications 1 à 4, **caractérisé en ce que**
i) dans une première étape destinée à éliminer les siloxanes cycliques d'un mélange qui contient des siloxanes cycliques et des siloxanes à groupes hydroxy en bout de chaîne, on sépare les siloxanes cycliques sous une pression de 100 à 50 000 Pa à l'aide d'un courant de vapeur d'eau, et
ii) dans une deuxième étape pour la stabilisation on ajoute aux siloxanes à groupes hydroxy liés à Si en bout de chaîne, qui présentent une teneur en siloxanes cycliques d'au maximum 5 % en poids, de préférence d'au maximum 2 % en poids, par rapport au poids total des siloxanes à groupes hydroxy en bout de chaîne, de l'ammoniac sous forme gazeuse ou dissous dans un solvant protique ou aprotique ou sous forme d'un composé libérant de l'ammoniac, en des quantités d'au moins 0,01 ppm en poids, de préférence d'au moins 1 ppm en poids, de façon particulièrement préférée d'au moins 2,5 ppm en poids et d'au maximum 100 ppm en poids, de préférence d'au maximum 20 ppm en poids, de façon particulièrement préférée d'au maximum 10 ppm en poids, chaque fois calculé en tant qu'ammoniac et par rapport au poids total des siloxanes à groupes hydroxy en bout de chaîne.

6. Procédé selon l'une quelconque des revendications 1 à 5, **caractérisé en ce que** les siloxanes cycliques présentent la formule générale (I)
(R¹R²SiO)ₘ (I)
dans laquelle
**R¹** représente un groupe alkyle ayant de 1 à 12 atomes de carbone,
**R²** représente un groupe alkyle ayant de 1 à 12 atomes de carbone ou un groupe aryle ayant de 5 à 30 atomes de carbone ou un groupe alcényle ayant de 2 à 12 atomes de carbone et
**m** représente des valeurs numériques entières de 3 à 20, de préférence de 3 à 6.

7. Procédé selon l'une quelconque des revendications 1 à 6, **caractérisé en ce que** les siloxanes à groupes hydroxy en bout de chaîne présentent la formule générale (II)
HO(R³R⁴SiO)ₙH (II)
dans laquelle
**R³** représente un groupe alkyle ayant de 1 à 12 atomes de carbone,
**R⁴** représente un groupe alkyle ayant de 1 à 12 atomes de carbone ou un groupe aryle ayant de 5 à 30 atomes de carbone ou un groupe alcényle ayant de 2 à 12 atomes de carbone et
**n** représente des valeurs numériques entières de 2 à 1 000.

8. Procédé selon l'une quelconque des revendications 5 à 7, caractérisé en ce la pression du processus dans l'étape i) vaut de 1 000 à 10 000 Pa, de préférence de 2 000 à 3 000 Pa.

9. Procédé selon l'une quelconque des revendications 5 à 8, **caractérisé en ce que** la température du processus dans l'étape i) vaut de 50 à 200 °C, de préférence de 140 à 180 °C, de façon particulièrement préférée de 155 à 180 °C.

10. Procédé pour la stabilisation de siloxanes selon l'une quelconque des revendications 1 à 9, **caractérisé en ce que**
i) dans une première étape destinée à éliminer les siloxanes cycliques d'un mélange qui contient des siloxanes cycliques et des siloxanes à groupes hydroxy liés à Si en bout de chaîne, on sépare les siloxanes cycliques sous une pression de 100 à 50 000 Pa et à une température de 140 à 180 °C, de préférence de 155 à 180 °C, à l'aide d'un courant de vapeur d'eau, pour obtenir des siloxanes à groupes hydroxy liés à Si en bout de chaîne, dans lesquels la proportion de siloxanes cycliques ayant de 3 à 6 atomes de silicium se situe à moins de 50 000 ppm en poids, de préférence à moins de 20 000 ppm en poids, de façon particulièrement préférée à moins de 10 000 ppm en poids, chaque fois par rapport au poids total des siloxanes à groupes hydroxy liés à Si en bout de chaîne et
ii) dans une deuxième étape pour la stabilisation on ajoute aux siloxanes à groupes hydroxy liés à Si en bout de chaîne, obtenus dans la première étape, de l'ammoniac sous forme gazeuse ou dissous dans un solvant protique ou aprotique ou sous forme d'un composé libérant de l'ammoniac, en des quantités d'au moins 0,01 ppm en poids, de préférence d'au moins 1 ppm en poids, de façon particulièrement préférée d'au moins 2,5 ppm en poids et d'au maximum 100 ppm en poids, de préférence d'au maximum 20 ppm en poids, de façon particulièrement préférée d'au maximum 10 ppm en poids, chaque fois calculé en tant qu'ammoniac et par rapport au poids total des siloxanes à groupes hydroxy liés à Si en bout de chaîne.

11. Procédé selon l'une quelconque des revendications 1 à 10, **caractérisé en ce qu'**on effectue le procédé en mode discontinu, semi-continu ou totalement continu.
